# DEMANDE DE BREVET EUROPEEN

(11) **EP 1 967 713 A1**
(43) Date de publication de la demande: **10.09.2008**
(21) Numéro de dépôt: 08152225.2
(22) Date de dépôt: 04.03.2008
(51) Int. Cl.: F01N 7/10

(54) **Dispositif de réchauffage des gaz d'échappement d'un moteur, collecteur d'échappement et ligne d'échappement adaptés, et véhicule les comportant**

(30) Priorité: 06.03.2007 FR 0753664
(71) Demandeur: Peugeot Citroën Automobiles Société Anonyme, 78140 Velizy Villacoublay (FR)
(72) Inventeur: BOUDARD, Emmanuel, 78960, VOISINS LE BRETONNEUX (FR); BEN MOUSSA, Ossama, 93500, PANTIN (FR)
(74) Mandataire: Ménès, Catherine

(57) **Abrégé**

Dispositif de réchauffage des gaz d'échappement d'un moteur (1), comportant au moins un réacteur thermochimique (10, 11, 12, 13) renfermant un composé (15) susceptible d'absorber un fluide (19) selon une réaction exothermique et de désorber ledit fluide à une température accessible par les gaz d'échappement du moteur (1) lorsque celui-ci est en régime thermique, au moins un réservoir (18) renfermant ledit fluide (19) et pourvu de moyens de chauffage et de refroidissement capables de vaporiser et de condenser ledit fluide (19), une ou des conduites (22, 23, 24, 25, 26) et au moins une vanne (27) faisant communiquer ledit réservoir (18) et le ou lesdits réacteurs (10, 1 1, 12, 13), caractérisé en ce que le ou lesdits réacteurs (10, 1 1, 12, 13) sont conçus pour être intégrés à un collecteur d'échappement (2) à double paroi équipant le moteur (1).

Collecteur d'échappement (2), et ligne d'échappement (7) adaptés à l'utilisation de ce dispositif, et véhicule les comportant.

## Description

L'invention concerne le domaine de la réduction des émissions polluantes des moteurs à explosion.

Les lignes d'échappement de véhicules automobiles sont aujourd'hui couramment équipées de dispositifs de traitement des émissions gazeuses du moteur. De cette façon, on réduit les émissions polluantes conformément aux normes anti-pollution en vigueur.

Parmi ces dispositifs figurent notamment les catalyseurs d'oxydation renfermant des métaux précieux déposés sur une couche d'oxydes. Ils ont pour fonction de réaliser l'oxydation du CO et des hydrocarbures HC imbrûlés. Ces catalyseurs d'oxydation, pour être opérationnels, doivent se trouver à une température relativement élevée. Cela implique que lors des phases de démarrage et des premiers kilomètres du parcours du véhicule où le catalyseur et les gaz qui le traversent sont encore relativement froids, la réaction catalysée n'est pas efficace. Or c'est justement pendant ces périodes que les émissions de CO et HC sont les plus élevées.

On peut tenter de pallier cet inconvénient en augmentant la quantité de métaux précieux du catalyseur d'oxydation, mais c'est une solution coûteuse. On peut aussi optimiser le régime du moteur lors des phages de démarrage, ce qui est une solution complexe. On a aussi proposé de réchauffer l'air d'admission, de façon à atteindre plus rapidement le régime thermique normal pour lequel le catalyseur d'oxydation atteint sa pleine efficacité.

Le but de l'invention est de proposer une solution alternative efficace à ce problème, qui soit en même temps peu coûteuse.

A cet effet, l'invention a pour objet un dispositif de réchauffage des gaz d'échappement d'un moteur à combustion, comportant au moins un réacteur thermochimique renfermant un composé susceptible d'absorber un fluide selon une réaction exothermique et de désorber ledit fluide à une température accessible par les gaz d'échappement du moteur lorsque celui-ci est en régime thermique, au moins un réservoir renfermant ledit fluide et pourvu de moyens de chauffage et de refroidissement capables respectivement de vaporiser et de condenser ledit fluide, une ou des conduites reliant ledit réservoir à au moins un réacteur et au moins une vanne commandant la communication entre ledit réservoir et le ou lesdits réacteurs, caractérisé en ce que le ou lesdits réacteurs sont conçus pour être intégrés à un collecteur d'échappement à double paroi équipant le moteur.

Ladite vanne peut être doublée par un clapet anti-retour.

Ledit composé peut être de la chaux (CaO) et ledit fluide est alors de l'eau.

Lesdits moyens de chauffage peuvent comporter une résistance électrique.

Lesdits moyens de refroidissement peuvent comporter des ailettes ménagées sur la paroi du réservoir.

L'invention a également pour objet un collecteur d'échappement à double paroi pour un moteur à explosion, comportant un conduit interne pour la circulation des gaz d'échappement et une enveloppe externe entourant à distance ladite conduite interne, caractérisé en ce que, sur au moins une portion de la longueur de ladite conduite interne, un réacteur thermochimique du type décrit précédemment est disposé contre la paroi extérieure de ladite conduite interne, un espace étant ménagé entre ledit réacteur et ladite enveloppe externe.

Il peut comporter plusieurs branches connectées au moteur, et au moins l'une des branches comporte un réacteur thermochimique.

L'invention a également pour objet une ligne d'échappement pour un moteur à explosion, comportant un collecteur à double paroi, caractérisée en ce que ledit collecteur est du type précédent.

Elle peut comporter un catalyseur d'oxydation en aval dudit collecteur.

L'invention a également pour objet un véhicule équipé d'un moteur à explosion et de sa ligne d'échappement, caractérisé en ce que ladite ligne d'échappement est du type précédent, et en ce qu'il comporte au moins un dispositif de réchauffage des gaz d'échappement du type précédent.

Comme on l'aura compris, l'invention repose d'abord sur l'association de deux types de dispositifs connus en eux-mêmes, à savoir :
- un réacteur thermochimique de type à évaporateur-absorbeur ;
- et un collecteur d'échappement à double paroi.

L'utilisation de réacteurs thermochimiques pour réaliser des échanges thermiques dans des organes d'un véhicule est décrite par exemple dans le document FR 02 13 548 où elle est appliquée à la production de la chaleur nécessaire à la régénération d'un filtre à particules.

Un tel réacteur thermochimique contient un composé réactif solide capable d'absorber un composé initialement liquide et vaporisé en vue de son absorption, par une réaction exothermique. L'exothermicité de la réaction permet de porter l'environnement du réacteur à la température élevée désirée. Périodiquement, il faut régénérer le réactif solide en le portant à une température élevée provoquant la désorption du réactif gazeux. Celui-ci est recueilli et condensé. Lorsqu'un fonctionnement du réacteur thermochimique est à nouveau nécessaire, ce dernier réactif est vaporisé, puis réinjecté sur le réactif solide pour y être absorbé.

Un exemple de collecteur d'échappement à double enveloppe est décrit dans le document US-B2-6 625 979. Il consiste en un collecteur comportant une enveloppe extérieure adiabatique et une enveloppe intérieure constituant la conduite dans laquelle circulent les gaz d'échappement. Ces enveloppes sont situées à distance l'une de l'autre et séparées localement par une entretoise formée par un réseau de fibres. Cette construction a pour fonction d'éviter un refroidissement trop rapide des gaz d'échappement après leur sortie du moteur, de sorte qu'ils soient mieux en mesure d'échauffer un catalyseur placé en aval sur la ligne d'échappement.

Dans la présente invention, on met à profit l'espace séparant les deux enveloppes du collecteur pour y installer un réacteur thermochimique mis au contact de l'enveloppe intérieure. Lors des phases d'absorption du réactif gazeux, le réacteur produit de la chaleur qui réchauffe les gaz d'échappement. En réalisant cette absorption lors des phases de démarrage et des premiers kilomètres de roulage du véhicule, on permet ainsi au catalyseur d'oxydation de travailler plus efficacement puisqu'il traite des gaz préalablement portés à une température égale à ou proche de la température de travail nominale du catalyseur, correspondant sensiblement à la température de gaz issus d'un moteur en régime thermique.

L'invention sera mieux comprise à la lecture de la description qui suit, donnée en référence aux figures annexées suivantes :
- la figure 1 qui montre schématiquement un moteur, son collecteur d'échappement et sa ligne d'échappement, équipés d'un dispositif selon l'invention,
- la figure 2 qui montre schématiquement une section selon II-II d'une portion du collecteur d'échappement.

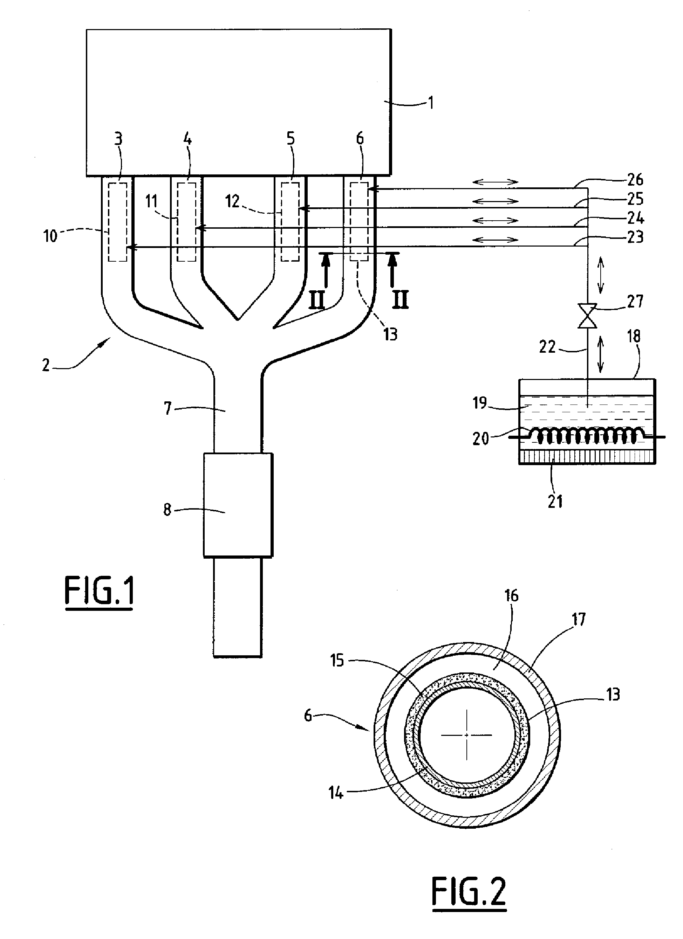

La figure 1 montre un moteur 1 à quatre cylindres, équipé classiquement d'un collecteur d'échappement 2 dont les branches 3, 4, 5, 6 connectées aux sorties des cylindres fusionnent pour former le début d'une ligne d'échappement 7 équipée d'un catalyseur d'oxydation 8.

Selon l'invention, chaque branche 3, 4, 5, 6 du collecteur 2 renferme au moins sur une portion de sa longueur un réacteur thermochimique 10, 11, 12, 13.

Comme on le voit sur la figure 2, la branche 6 du collecteur 2 comporte, disposés de manière concentrique, de l'intérieur vers l'extérieur, dans la portion faisant l'objet de la coupe selon 11-11 :
- un conduit interne 14 dans lequel circulent les gaz d'échappement, dont la paroi présente une relativement faible épaisseur (0,25mm par exemple réalisé dans une tôle d'acier).
- un réacteur thermochimique 13 disposé contre la paroi extérieure du conduit interne 14, pour que la chaleur qu'il dégage lors de son fonctionnement soit transmise aux gaz d'échappement, et inversement pour que la chaleur dégagée par les gaz d'échappement soit transmise au réacteur thermochimique 13 lors des phases de régénération du composé 15 qu'il renferme; celui-ci peut, classiquement, être un mélange de graphite naturel expansé et d'un composé actif s'hydratant de manière exothermique tel que la chaux CaO;
- un espace 16 formant lame d'air isolante,
- une enveloppe externe 17 à forte épaisseur (par exemple, une tôle d'acier dont l'épaisseur est comprise entre 1 et 3mm).

Les autres branches 3, 4, 5 du collecteur 2 sont constituées de la même façon, dans l'exemple représenté.

L'installation selon l'invention est complétée par un réservoir 18 renfermant le fluide 19 intervenant lors de l'utilisation des réacteurs thermochimiques 10, 11, 12, 13. Ce fluide, dans l'exemple décrit, est de l'eau. Le réservoir 18 comporte :
- des moyens de chauffage du fluide 19, tels qu'une résistance électrique 20, capables de faire passer le fluide 19 de l'état liquide à l'état de vapeur;
- des moyens de refroidissement tels que des ailettes 21 ménagées sur la paroi extérieure du réservoir 18, capables de condenser la vapeur revenant dans le réservoir 18 lors des opérations de régénération des réacteurs thermochimiques 10, 11, 12, 13 ; on peut aussi prévoir un ventilateur (non représenté) assurant une circulation forcée d'air autour des ailettes 21 pour augmenter l'efficacité du refroidissement; en plus ou à la place des ailettes 21, on peut prévoir une enveloppe alimentée en liquide de refroidissement prélevé dans le circuit de refroidissement du moteur.

Une conduite 22 est branchée sur le réservoir 18 et se divise en plusieurs branches 23, 24, 25, 26 débouchant chacune dans un des réacteurs thermochimiques 10, 11, 12, 13, permettant de les alimenter en vapeur d'eau lors de leurs phases de fonctionnement et d'en évacuer la vapeur d'eau lors de leurs phases de régénération. Une électrovanne 27 (ou tout autre dispositif fonctionnellement équivalent) implantée sur la conduite 22 commande la communication entre le réservoir 18 et les réacteurs thermochimiques 10, 11, 12, 13, et donc l'évacuation ou d'admission de la vapeur d'eau hors de ou dans le réservoir 18.

Lorsqu'il est nécessaire de faire fonctionner les réacteurs thermochimiques 10, 11, 12, 13, par exemple au moment du démarrage et des premiers kilomètres de roulage du véhicule, on fait chauffer la résistance 20 de manière à transformer l'eau 19 en vapeur sous pression, puis on ouvre l'électrovanne 27. Ce mode sera utilisé lorsque la température ambiante est relativement basse, par exemple inférieure à 10°C.

La chaleur spécifique du réservoir et du fluide sera utilisée de manière à transformer l'eau 19 en vapeur sous pression - sans recours à une énergie externe - lorsque la température ambiante est suffisante (par exemple de l'ordre de 20 °C). Ce mode suppose que le volume du réservoir soit suffisant.

La vapeur d'eau est alors admise dans les réacteurs thermochimiques 10, 11, 12, 13, où elle va hydrater la chaux qu'ils renferment. La chaleur produite par cette hydratation est alors transmise aux gaz d'échappement traversant le collecteur 2, par l'intermédiaire des parois des conduits internes 14 du collecteur, et les porte à une température suffisante pour rendre opérationnel le catalyseur d'oxydation 8 lorsque les gaz le traversent. Lorsqu'au moins la plus grande partie de l'eau 19 a été vaporisée et est parvenue aux réacteurs thermochimiques 10, 11, 12, 13, l'électrovanne 27 est fermée et l'alimentation en courant électrique de la résistance 20 est interrompue.

Lorsque le véhicule a atteint son régime de croisière et que la température des gaz d'échappement est naturellement suffisante pour faire fonctionner le catalyseur d'oxydation 8, on peut déclencher une régénération des réacteurs thermochimiques 10, 11, 12, 13 en ouvrant l'électrovanne 27. La chaleur dégagée par les gaz d'échappement circulant dans le collecteur 2 est, à ce stade, suffisante pour provoquer la déshydratation du composé 15 des réacteurs 10, 11, 12, 13, et l'ouverture de l'électrovanne 27 permet à la vapeur d'eau se dégageant des réacteurs 10, 11, 12, 13 de retourner dans le réservoir 18 où elle est condensée sous l'effet des moyens de refroidissement du réservoir 18. Une fois que la régénération est achevée et qu'au moins la plus grande partie de l'eau 19 est revenue dans le réservoir 18, l'électrovanne 27 est fermée.

Dans une variante de l'invention, l'électrovanne 27 peut être doublée avec un clapet anti-retour permettant le seul passage de la vapeur d'eau dans le sens réacteur-réservoir. Ceci permet de fermer l'électrovanne 27 dès que la période de chauffe du collecteur est terminée, le clapet prenant alors seul le relais de l'électrovanne.

Il n'est, bien entendu, pas forcément indispensable que toutes les branches 3, 4, 5, 6 du collecteur 2 soient équipées d'un réacteur thermochimique 10, 11, 12, 13. L'essentiel est que l'ensemble formé par les divers réacteurs (ou le réacteur unique s'il n'y en a qu'un) possède une puissance de chauffe telle que les gaz d'échappement sortant du collecteur 2 soient à une température suffisante. On peut également prévoir un seul réacteur thermochimique qui serait implanté dans la partie terminale du collecteur 2. Mais implanter plusieurs réacteurs 10, 11, 12, 13, disposés sur les branches 3, 4, 5, 6 du collecteur 2 est généralement plus avantageux. En effet, cela peut permettre d'avoir une plus grande surface d'échange avec les gaz d'échappement qu'avec un réacteur unique renfermant une quantité de réactif égale à la somme des quantités de réactif présentes dans de multiples réacteurs 10, 11, 12, 13.. On peut également prévoir que chaque réacteur 10, 11, 12, 13 dispose de son propre réservoir de fluide et des organes (vanne, conduite) associés.

Le fait que le collecteur 2 soit du type à double enveloppe a pour avantage d'assurer que la chaleur dégagée par les réacteurs 10, 11, 12, 13 est transmise aux gaz d'échappement avec un minimum de déperdition, car l'espace 16 et l'enveloppe externe 17 isolent les réacteurs 10, 11, 12, 13 du milieu extérieur qui, sinon, serait une source de refroidissement.

Le bilan énergétique de l'opération est favorable, en ce que la transformation de 18g d'eau en vapeur consomme 45 kJ à basse température (entre 0°C et 100°C), alors que l'utilisation de cette même quantité de vapeur d'eau pour hydrater de la chaux dégage 106 kJ (à plus de 300°C). II est donc plus avantageux, en terme d'énergie dépensée, d'utiliser l'invention plutôt que de chauffer les gaz d'échappement directement à l'aide de vapeur d'eau.

La puissance électrique dédiée au chauffage de l'eau 19 doit être choisie pour procurer une vaporisation rapide de l'eau 19, par exemple entre 10 et 30s. L'opération de régénération des réacteurs 10, 11, 12, 13 peut, elle, être sensiblement plus lente, par exemple entre 1 et 5 minutes. La puissance de refroidissement peut être choisie en conséquence.

Pour assurer une meilleure efficacité du dispositif dans la phase de démarrage, on peut faire débuter le chauffage de l'eau avant le démarrage du moteur 1, par exemple lorsque le conducteur ouvre la portière du véhicule. L'ouverture de l'électrovanne 27 a lieu au moment du démarrage du moteur 1 et la réaction est quasi immédiate.

A titre indicatif, pour un moteur à 4 cylindres de cylindrée de 2000 cm³, à essence, GPL ou GNV, on peut utiliser des quantités totales de 7 g d'eau et de 13 g de chaux répartis dans quatre réacteurs 10, 11, 12, 13 pour porter les gaz d'échappement à 200°C en 20s, en évaporant l'eau à 70°C à l'aide d'une puissance électrique de 900 W. Il suffira ensuite d'atteindre une température de 500°C au niveau du collecteur 2 et de prévoir une puissance de refroidissement de 60W à 100°C pendant 5 minutes pour régénérer les réacteurs 10, 11, 12, 13 et remettre le système dans son état initial. Ces valeurs sont aisément accessibles. En particulier les moteurs essence atteignent facilement 500°C au niveau de leur collecteur 2.

Pour les moteurs diesel où les températures des gaz d'échappement sont moins élevées, on peut utiliser d'autres réactifs que la chaux, par exemple des éléments lithophiles à grand rayon ionique (LIL), SrCl₂, MgO, voire d'autres fluides que l'eau, l'essentiel étant que le couple réactif/fluide puisse se combiner de façon exothermique et réversible dans des conditions compatibles avec l'utilisation de l'invention.

L'utilisation de l'invention permet de diminuer le temps de latence entre le démarrage du moteur et la mise en route du catalyseur d'oxydation, en apportant de l'énergie au plus près de celui-ci. Elle permet donc de limiter efficacement les émissions de CO et HC avec un apport d'énergie limité. Elle donne aussi plus de latitude aux constructeurs pour le réglage des régulations du moteur lors des démarrages par temps froid. L'invention ne met en oeuvre que des matériaux et dispositifs peu coûteux et peu encombrants. Elle peut être implantée sur tout type de véhicule pouvant être équipé d'un collecteur d'échappement à double paroi.

L'invention est particulièrement pertinente pour l'utilisation au démarrage car alors le débit des gaz étant faible, il existe un chemin préférentiel des gaz dans le catalyseur, ce qui permet donc de ne chauffer qu'une petite portion du catalyseur.

Le dispositif selon l'invention peut également être utilisé dans le but de réchauffer d'autres gaz en circulation dans les conduits liés au moteur.

## Revendications

1. Dispositif de réchauffage des gaz d'échappement d'un moteur à combustion (1), comportant au moins un réacteur thermochimique (10, 11, 12, 13) renfermant un composé (15) susceptible d'absorber un fluide (19) selon une réaction exothermique et de désorber ledit fluide à une température accessible par les gaz d'échappement du moteur (1) lorsque celui-ci est en régime thermique, au moins un réservoir (18) renfermant ledit fluide (19) et pourvu de moyens de chauffage et de refroidissement capables respectivement de vaporiser et de condenser ledit fluide (19), une ou des conduites (22, 23, 24, 25, 26) reliant ledit réservoir (18) à au moins un réacteur (10, 11, 12, 13) et au moins une vanne (27) commandant la communication entre ledit réservoir (18) et le ou lesdits réacteurs (10, 11, 12, 13), **caractérisé en ce que** le ou lesdits réacteurs (10, 11, 12, 13) sont conçus pour être intégrés à un collecteur d'échappement (2) à double paroi équipant le moteur (1).

2. Dispositif selon la revendication 1, **caractérisé en ce que** la vanne (27) est doublée par un clapet anti-retour.

3. Dispositif selon la revendication 1 ou la revendication 2, **caractérisé en ce que** ledit composé (15) est de la chaux et **en ce que** ledit fluide (19) est de l'eau.

4. Dispositif selon l'une des revendications 1 à 3, **caractérisé en ce que** lesdits moyens de chauffage comportent une résistance électrique (20).

5. Dispositif selon l'une des revendications 1 à 4, **caractérisé en ce que** lesdits moyens de refroidissement comportent des ailettes (21) ménagées sur la paroi du réservoir (19).

6. Collecteur d'échappement (2) à double paroi pour un moteur à explosion (1), comportant un conduit interne (14) pour la circulation des gaz d'échappement et une enveloppe externe (17) entourant à distance ladite conduite externe (14), un réacteur thermochimique (10, 11, 12, 13) renfermant un composé (15) susceptible d'absorber un fluide (19) selon une réaction exothermique et de désorber ledit fluide à une température accessible par les gaz d'échappement du moteur (1) lorsque celui-ci est en régime thermique est disposé contre la paroi extérieure de ladite conduite interne (14), un espace (16) étant aménagé entre ledit réacteur (10, 11, 12, 13) et ladite enveloppe externe (17).

7. Collecteur selon la revendication 6, **caractérisé en ce qu'**il comporte plusieurs branches (3, 4, 5, 6) connectées au moteur (1), et **en ce que** au moins l'une des branches (3, 4, 5, 6) comporte un réacteur thermochimique (10, 11, 12, 13).

8. Ligne d'échappement (3) pour un moteur à explosion, comportant un collecteur (2) à double paroi, **caractérisée en ce que** ledit collecteur (2) est du type selon l'une des revendications 6 ou 7.

9. Ligne d'échappement selon la revendication 8, **caractérisée en ce qu'**elle comporte un catalyseur d'oxydation (8) en aval dudit collecteur (2).

10. Véhicule équipé d'un moteur à explosion (1) et de sa ligne d'échappement (7), **caractérisé en ce que** ladite ligne d'échappement (7) est du type selon la revendication 8 ou 9, et **en ce qu'**il comporte au moins un dispositif de réchauffage des gaz d'échappement selon l'une des revendications 1 à 5.
